# EUROPEAN PATENT SPECIFICATION

(11) **EP 1 055 514 B1**
(45) Date of publication and mention of the grant of the patent: **16.04.2003**
(21) Application number: 00201740.8
(22) Date of filing: 17.05.2000
(51) Int. Cl.: B32B 27/08, C09J 7/02, B44C 1/17

(54) **Multilayer composite material useful to upgrade or protect natural or synthetic products surface**
Mehrschichtverbundmaterial verwendbar zur Verbesserung oder zum Schutz der Oberfläche eines naturlichen oder synthetischen Produktes
Matériau composite multicouche utile pour améliorer ou protéger la surface d'un produit naturel ou synthétique

(30) Priority: 24.05.1999 IT LU990012
(43) Date of publication of application: 29.11.2000
(73) Proprietor: Rotoplast S.R.L., 55023 Borgo a Mozzano (LU) (IT)
(72) Inventor: Bellini, Fabrizio, 50047 Prato (FI) (IT)
(74) Representative: Cioni, Carlo

(56) References cited:
- FR-A- 2 206 365
- US-A- 4 308 310

## Description

The present invention refers to multilayer material protecting and/or upgrading natural or synthetic product surface appearance totally or partially coated with said multilayer materials. The invention also concerns a manufacturing process of said multilayer material.

More particularly the present invention refers to multilayer material application to flexible products surface, such natural or synthetic leather, natural, artificial or synthetic fabrics, non woven fabrics, paper and the like. Moreover the invention is directed to a simple and inexpensive process to manufacture multilayer materials that may be stored as transfer products for a subsequent utilization.

Several methods have been disclosed and practiced to decorate articles consisting of synthetic and natural articles by using the same method as utilized in the paper printing technology as silk-screen, off-set and flexographic printing systems.

It is also possible to utilize the so-called ink transfer method based on ink transfer by sublimation from a temporary carrier to the product to be decorated.

The abovementioned systems are not flexible and require the use of expensive equipment. In addition they are not suitable for an output based on a small amount of articles for each decoration motif and when a frequent change of decorative motifs is requested.

Other methods proposed for upgrading or protecting surfaces make use of a process defined as transfer process consisting of decorative motif preparation or application on a suitable carrier. Decorative motif element is obtained by covering a proper carrier film with decorative motif or applying decorative motif, in form of film, onto the carrier film. Upon the film constituting or supporting the decorative element and is placed in contact with the surface to be decorated, an adhesive layer should be provided in order to bind the decorative element to the surface to be decorated; another adhesive layer should be provided in order to allow a protective film to be applied thereupon. The surfaces of the adhesive layers has to be protected by a so-called service films, namely the surface between the decorative element and the surfaces to be decorated from one side and the adhesive layer between the decorative element and the external ambient should be necessarily protected .Protective service film will be removed when applying the decorative elements. In order to easily remove the protective layers they must provide at least a thin silicon layer or similar material that enable an easy separation. Surface remaining silicone layer prevents any further treatment of the decorating surface as, for instance, overprinting or any operation which implies the deposit of materials on the surface. Said drawback significantly limits the use of the systems in that it inhibits any subsequent treatment.

It is an object of the invention, as a new composite product, a multilayer decorative element that may be applied to article surfaces to be decorated.

It is a further object of the present invention a process for the preparation of a multilayer decorative element that can be utilized to decorate the surface of an article made of natural, artificial or synthetic material.

Still another object of the invention is a process for surfaces decorating process using the abovementioned decorative elements.

The scopes and objects of the invention are accomplished by using: the decorative elements of the present invention, the manufacturing process of the present invention, and by the decorative elements application process to the surfaces to be decorated.

The expression "decorating", "decorative" and other similar words, as used in the specification and claims have a broad meaning and includes all treatments and materials capable to partially or totally cover the interest product surface in order to improve the product appearance or protect, the exposed surface.

Useful covering and protecting materials according to the invention is a multilayer product comprising of:
a) An external service film protecting the decorative element. to be removed immediately before its application to the surface to be decorated.
b) An adhesive layer to fix multilayer decorative element to the
c) surface to be upgraded or protected. The adhesive being preferably a hot melt adhesive.
d) A decorative element carrier to be applied to the surface to be decorated, said carrier material consisting of polyurethane and comprising of:

| | |
|---|---|
| Polyurethane dissolved in an organic solvent (30% of dry polyurethane) | 30 to 70%wt |
| Light aliphatic alcohol | 15 to 30%wt |
| Aliphatic or aromatic hydrocarbon | 15 to 30%wt |
| Predispersed silica | 0.5 to 5%wt |
| Predispersed silicone | 0.5 to 5%wt |
| Wax | 0.5 to 10%wt |

d) A protecting film covering the decorative layer as defined in c). Said protective film being easily removed during the multilayer fixation or after application thereof.

The decorative element carrier can be used as such, as a protecting layer, or it may carry or embed some decorative solid agents as it is described thereafter.

It is possible to use two decorative carrier layers covering both sufaces of decorative element. In that case decorating material defined in c) can be the same for both layers. In some cases the adhesive layer fixing multilayer product to the surface to be decorated could be different from the one defined in b) above , because of specific adhesion requirements.

Furthermore it may be possible to use more than two decorating carrier layers when several decorative elements are used.

Decorative element may also consist of one or more colored and transparent films or one or more films whereupon decorative motifs are reported. In addition decorative effect may be obtained by embedding into the decorative layers any solid material. A non restricting list of the substances that can be used is as follows: pigments, metal powder, small pieces of colored materials like plastic, paper, fabric, glass, metals as well as leaves, flowers or mixture thereof.

The protective film can be made of any material usually known for the same purpose like h polyethylene polypropylene, polyester and polyvinyl chloride. The best results have been obtained with a 12 micron polyethylene terephtalate film and 30-40 microns polyolefin film.

Light alcohol that can be used in the decorative composition under c) above may be selected among methyl, ethyl, propyl, isopropyl, n-butyl, iso-butyl, sec-butyl alcohol and mixture thereof. Very good results have been obtained with isopropyl alcohol.

The best hydrocarbon to be used in the decorative composition is toluene.

The invention is now explained in more details with reference to the following application examples that is given only for illustrative purpose.

### Example 1 (Comparative)

Ten 20x20 cm samples of decorative multilayers elements consisting of colored films and two protecting transparent films have been prepared for decorating and protecting samples of natural and synthetic leather. The protecting films have been applied on both side of the decorating film using silicone containing commercial adhesives materials enabling an easy removal of protective film. The decorating samples have been applied on the samples of 5 synthetic and 5 natural leather by heating the hot-melt adhesives. The samples have been left to cool down at room temperature and then 5 samples have been subject to additional decorating treatment by applying labels thereon, while the other five were subject to a printing procedure. The additional treatments were not stable, resulting in a detachment of labels and disappearance of the printed characters.

### Example 2 (Invention)

Example 1 was repeated with samples of the same material with the only difference that the decorative compositions under c) above was used instead of the commercial adhesives. The decorated samples submitted to further treatment according to example 1 were perfectly stable also after 1 year from the treatment.

## Claims

1. A multilayer decorative element that can be utilized to decorate the surface of an article made of natural, artificial or synthetic material consisting of:
a) an external service film layer protecting the decorative element, to be removed immediately before its application to the surface to be decorated.
b) An adhesive layer to fix multilayer decorative element to the surface to be upgraded or protected.
c) A decorative element carrier to be applied to the surface to be decorated, said carrier material being based essentially on polyurethane and comprising of:
| | |
|---|---|
| Polyurethane dissolved in an organic solvent (30% of dry polyurethane) | 30 to 70%wt |
| Light aliphatic alcohol | 15 to 30%wt |
| Aliphatic or aromatic hydrocarbon | 15 to 30%wt |
| Predispersed silica | 0.5 to 5%wt |
| Predispersed silicone | 0.5 to 5%wt |
| Wax | 0.5 to 10%wt |
d) A protecting film covering the decorative layer as defined in c).

2. A multilayer decorative element that can be utilized to decorate the surface of an article made of natural, artificial or synthetic material according to claim 1 **characterised in that** the decorative element carrier under c) acts as decorative layer.

3. A multilayer decorative element that can be utilized to decorate the surface of an article made of natural, artificial or synthetic material according to claim 1 or 2 **characterised in that** it comprises two decorative carrier layers covering both sides of the decorative element.

4. A multilayer decorative element that can be utilized to decorate the surface of an article made of natural, artificial or synthetic material according to claim 1 or 2 **characterised in that** the light aliphatic alcohol in the decorative carrier composition is selected among methyl, ethyl, propyl, isopropyl, n-butyl, isobutyl, sec-butyl alcohol and mixture thereof..

5. A multilayer decorative element that can be utilized to decorate the surface of an article made of natural, artificial or synthetic material according to claim 3 **characterised in that** the aliphatic alcohol is isopropyl alcohol.

6. A multilayer decorative element that can be utilized to decorate the surface of an article made of natural, artificial or synthetic material according to aclaim 1 or 2 **characterised in that** the hydrocarbon included in the adhesive composition is toluene.

7. A multilayer decorative element that can be utilized to decorate the surface of an article made of natural, artificial or synthetic material according to aclaim 1 or 2 **characterised in that** the adhesive under b) above is a hot melt adhesive.

8. Use of multilayer decorative element according to anyone of preceding claims todecorate and protect surfaces of natural or synthetic articles

9. A multilayer element according to anyone of the preceding claims **characterised in that** it comprises more than two adhesive layers and more than one decorating elements.

10. A multilayer decorative element that can be utilized to decorate the surface of an article made of natural, artificial or synthetic material according to anyone of the preceding claims **characterised in that** the decorative component is a colored film

11. A multilayer decorative element that can be utilized to decorate the surface of an article made of natural, artificial or synthetic material according claim 1 **characterised in that** the decorative component is a pattern reported on a transparent film and fixed to the decorative element carrier specified under c) of claim 1

12. A multilayer decorative element that can be utilized to decorate the surface of an article made of natural, artificial or synthetic material according to claim 1 **characterised in that** the decorative component is a solid element embedded into the decorative element carrier layer specified under c) of claim 1.

13. A multilayer decorative element that can be utilized to decorate the surface of an article made of natural, artificial or synthetic material according toanyone of the preceding claims **characterised in that** the decorative component is selected among: pigments, metal powder, small pieces of colored materials like plastic, paper, fabric, glass, metals as well as leaves, flowers or mixture thereof.

## Patentansprüche

1. Ein mehrschichtiges dekoratives Element, das benutzt werden kann, um die Oberfläche eines Gegenstands, welcher aus natürlichem, künstlichem oder synthetischem Material gefertigt ist, zu dekorieren, bestehend aus:
a) einer äußeren Schutzfolienschicht, welche das dekorative Element schützt, die unmittelbar vor dessen Anwendung auf die zu dekorierende Oberfläche entfernt werden muss,
b) einer Klebeschicht, um das mehrschichtige dekorative Element an der Oberfläche, die aufgewertet oder geschützt werden soll, zu befestigen,
c) einem Träger des dekorativen Elements, welcher auf die zu dekorierende Oberfläche aufgetragen werden soll, wobei das Trägermaterial im wesentlichen auf Polyurethan basiert und umfasst:
| | |
|---|---|
| Polyurethan, gelöst in einem organischen Lösungsmittel (30 % von trockenem Polyurethan) | 30 bis 70 Gew.-% |
| leichten aliphatischen Alkohol | 15 bis 30 Gew.-% |
| aliphatischen oder aromatischen Kohlenwasserstoff | 15 bis 30 Gew.-% |
| vordispergiertes Silica | 0,5 bis 5 Gew.-% |
| vordispergiertes Silicon | 0,5 bis 5 Gew.-% |
| Wachs | 0,5 bis 10 Gew.-% |
d) seiner Schutzfolie, welche die dekorative Schicht, wie sie in c) definiert ist, bedeckt.

2. Ein mehrschichtiges dekoratives Element, das benutzt werden kann, um die Oberfläche eines Gegenstands, welcher aus natürlichem, künstlichem oder synthetischem Material gefertigt ist, zu dekorieren, gemäß Anspruch 1, **dadurch gekennzeichnet, dass** der Träger des dekorativen Elements unter c) als dekorative Schicht wirkt.

3. Ein mehrschichtiges dekoratives Element, das benutzt werden kann, um die Oberfläche eines Gegenstands, welcher aus natürlichem, künstlichem oder synthetischem Material gefertigt ist, zu dekorieren, gemäß Anspruch 1 oder 2, **dadurch gekennzeichnet, dass** dieses zwei dekorative Trägerschichten umfasst, welche beide Seiten des dekorativen Elements bedecken.

4. Ein mehrschichtiges dekoratives Element, das benutzt werden kann, um die Oberfläche eines Gegenstands, welcher aus natürlichem, künstlichem oder synthetischem Material gefertigt ist, zu dekorieren, gemäß Anspruch 1 oder 2, **dadurch gekennzeichnet, dass** der leichte aliphatische Alkohol in der dekorativen Trägerzusammensetzung ausgewählt ist aus Methyl-, Ethyl-, Propyl-, Isopropyl-, n-Butyl-, Isobutyl-, sec-Butylalkohol und Mischungen von diesen.

5. Ein mehrschichtiges dekoratives Element, das benutzt werden kann, um die Oberfläche eines Gegenstands, welcher aus natürlichem, künstlichem oder synthetischem Material gefertigt ist, zu dekorieren, gemäß Anspruch 3, **dadurch gekennzeichnet, dass** der aliphatische Alkohol Isopropylalkohol ist.

6. Ein mehrschichtiges dekoratives Element, das benutzt werden kann, um die Oberfläche eines Gegenstands, welcher aus natürlichem, künstlichem oder synthetischem Material gefertigt ist; zu dekorieren, gemäß Anspruch 1 oder 2, **dadurch gekennzeichnet, dass** der Kohlenwasserstoff, welcher in der Klebezusammensetzung enthalten ist, Toluol ist.

7. Ein mehrschichtiges dekoratives Element, das benutzt werden kann, um die Oberfläche eines Gegenstands, welcher aus natürlichem, künstlichem oder synthetischem Material gefertigt ist, zu dekorieren, gemäß Anspruch 1 oder 2, **dadurch gekennzeichnet, dass** der Kleber unter b) oben ein Heißschmelzkleber ist.

8. Verwendung des mehrschichtigen dekorativen Elements gemäß irgendeinem der vorhergehenden Ansprüche, um Oberflächen von natürlichen oder synthetischen Gegenständen zu dekorieren und zu schützen.

9. Ein mehrschichtiges Element gemäß irgendeinem der vorhergehenden Ansprüche, **dadurch gekennzeichnet, dass** es mehr als zwei Klebeschichten und mehr als ein dekoratives Element umfasst.

10. Ein mehrschichtiges dekoratives Element, das benutzt werden kann, um die Oberfläche eines Gegenstands, welcher aus natürlichem, künstlichem oder synthetischem Material gefertigt ist, zu dekorieren, gemäß irgendeinem der vorhergehenden Ansprüche, **dadurch gekennzeichnet, dass** die dekorative Komponente eine gefärbte Folie ist.

11. Ein mehrschichtiges dekoratives Element, das benutzt werden kann, um die Oberfläche eines Gegenstands, welcher aus natürlichem, künstlichem oder synthetischem Material gefertigt ist, zu dekorieren, gemäß Anspruch 1, **dadurch gekennzeichnet, dass** die dekorative Komponente ein Muster ist, welches auf einer transparenten Folie aufgebracht ist und an dem Träger des dekorativen Elements, der unter c) von Anspruch 1 angegeben ist, befestigt ist.

12. Ein mehrschichtiges dekoratives Element, das benutzt werden kann, um die Oberfläche eines Gegenstands, welcher aus natürlichem, künstlichem oder synthetischem Material gefertigt ist, zu dekorieren, gemäß Anspruch 1, **dadurch gekennzeichnet, dass** die dekorative Komponente ein festes Element ist, welches in die Trägerschicht des dekorativen Elements, die unter c) von Anspruch 1 angegeben ist, eingebettet ist.

13. Ein mehrschichtiges dekoratives Element, das benutzt werden kann, um die Oberfläche eines Gegenstands, welcher aus natürlichem, künstlichem oder synthetischem Material gefertigt ist, zu dekorieren, gemäß irgendeinem der vorhergehenden Ansprüche, **dadurch gekennzeichnet, dass** die dekorative Komponente ausgewählt ist aus: Pigmenten, Metallpulver, kleinen Stückchen gefärbter Materialien wie Kunststoff, Papier, Stoff, Glas, Metallen wie auch Blättern, Blumen oder Mischungen von diesen.

## Revendications

1. Elément décoratif multicouche pouvant être utilisé pour décorer la surface d'un article fabriqué en matière naturelle, artificielle, ou synthétique consistant en :
a) une couche mince externe utilitaire protégeant l'élément de décoration, à ôter immédiatement avant son application sur la surface à décorer ;
b) une couche adhésive pour fixer l'élément décoratif multicouche sur la surface à renforcer ou à protéger ;
c) un support d'élément décoratif à appliquer sur la surface à décorer, ledit matériau de support étant essentiellement à base de polyuréthane et comprenant les composants suivants :
| | |
|---|---|
| Polyuréthane dissous dans un solvant organique (30% de polyuréthane sec) | 30 à 70% en poids |
| Alcool aliphatique léger | 15 à 30% en poids |
| Hydrocarbure aliphatique ou aromatique | 15 à 30% en poids |
| Silice prédispersée | 0,5 à 5% en poids |
| Silicone prédispersée | 0,5 à 5% en poids |
| Cire | 0,5 à 10% en poids |
d) un film de protection couvrant la couche décorative telle que définie en c).

2. Elément décoratif multicouche pouvant être utilisé pour décorer la surface d'un article fabriqué en matière naturelle, artificielle, ou synthétique selon la revendication 1, **caractérisé en ce que** le support d'élément décoratif selon c) fait office de couche décorative.

3. Elément décoratif multicouche pouvant être utilisé pour décorer la surface d'un article fabriqué en matière naturelle, artificielle, ou synthétique selon la revendication 1 ou 2, **caractérisé en ce qu'**il comprend deux couches de support décoratif sur les deux faces de l'élément décoratif.

4. Elément décoratif multicouche pouvant être utilisé pour décorer la surface d'un article fabriqué en matière naturelle, artificielle, ou synthétique selon la revendication 1 ou 2, **caractérisé en ce que** l'alcool aliphatique léger dans la composition du support décoratif est choisi parmi l'alcool méthylique, l'alcool éthylique, l'alcool propylique, l'alcool isopropylique, l'alcool n-butylique, l'alcool isobutylique, l'alcool sec-butylique et le mélange de ceux-ci.

5. Elément décoratif multicouche pouvant être utilisé pour décorer la surface d'un article fabriqué en matière naturelle, artificielle, ou synthétique selon la revendication 3, **caractérisé en ce que** l'alcool aliphatique est de l'alcool isopropylique.

6. Elément décoratif multicouche pouvant être utilisé pour décorer la surface d'un article fabriqué en matière naturelle, artificielle, ou synthétique selon la revendication 1 ou 2, **caractérisé en ce que** l'hydrocarbure compris dans la composition adhésive est du toluène.

7. Elément décoratif multicouche pouvant être utilisé pour décorer la surface d'un article fabriqué en matière naturelle, artificielle, ou synthétique selon la revendication 1 ou 2, **caractérisé en ce que** l'adhésif selon b) précédemment est un adhésif thermofusible.

8. Utilisation d'un élément décoratif multicouche selon l'une quelconque des revendications précédentes pour décorer et protéger les surfaces d'articles naturels ou synthétiques.

9. Elément décoratif multicouche selon l'une quelconque des revendications précédentes **caractérisé en ce qu'**il comprend plus de deux couches adhésives et plusieurs éléments décoratifs.

10. Elément décoratif multicouche pouvant être utilisé pour décorer la surface d'un article fabriqué en matière naturelle, artificielle, ou synthétique selon l'une quelconque des revendications précédentes **caractérisé en ce que** le composé décoratif est un fil coloré.

11. Elément décoratif multicouche pouvant être utilisé pour décorer la surface d'un article fabriqué en matière naturelle, artificielle, ou synthétique selon la revendication 1, **caractérisé en ce que** le composé décoratif est un motif rapporté sur un film transparent et solidarisé au support d'élément décoratif spécifié selon c) de la revendication 1.

12. Elément décoratif multicouche pouvant être utilisé pour décorer la surface d'un article fabriqué en matière naturelle, artificielle, ou synthétique selon la revendication 1, **caractérisé en ce que** le composé décoratif est un élément solide noyé dans le support d'élément décoratif spécifié selon c) de la revendication 1.

13. Elément décoratif multicouche pouvant être utilisé pour décorer la surface d'un article fabriqué en matière naturelle, artificielle, ou synthétique selon l'une quelconque des revendications précédentes **caractérisé en ce que** le composé décoratif est choisi parmi les pigments, la poudre métallique, de petits morceaux de matière colorée telle que du plastique, du papier, du verre, des métaux ainsi que des feuilles, des fleurs et des compositions de ceux-ci.
